# EUROPÄISCHE PATENTSCHRIFT

(11) **EP 1 406 797 B1**
(45) Veröffentlichungstag und Bekanntmachung des Hinweises auf die Patenterteilung: **05.10.2005**
(21) Anmeldenummer: 01953833.9
(22) Anmeldetag: 06.07.2001
(51) Int. Cl.: B60S 1/38

(54) **SPOILER FÜR EIN SCHEIBENWISCHERBLATT**
SPOILER FOR A WINDSCREEN WIPER BLADE
DEFLECTEUR DESTINE A UN BALAI D'ESSUIE-GLACE

(43) Veröffentlichungstag der Anmeldung: 14.04.2004
(73) Patentinhaber: ROBERT BOSCH GMBH, 70442 Stuttgart (DE)
(72) Erfinder: ROEKENS, Jurgen, B-1820 Steenokkerseel (BE)
(86) Internationale Anmeldenummer: PCT/DE2001/002441
(87) Internationale Veröffentlichungsnummer: WO 2003/004324

(56) Entgegenhaltungen:
- DE-A- 10 016 571
- DE-A- 19 627 113
- FR-A- 2 737 455
- PATENT ABSTRACTS OF JAPAN vol. 018, no. 611 (M-1708), 21. November 1994 (1994-11-21) & JP 06 234353 A (ICHIKOH IND LTD;OTHERS: 01), 23. August 1994 (1994-08-23) & JP 06 234353 A (NISSAN MOTOR CO LTD.) 23. August 1994 (1994-08-23)

## Beschreibung

### Stand der Technik

Die Erfindung betrifft einen Spoiler für ein Scheibenwischerblatt, mit mindestens einer Haltelasche und mindestens einem an der Haltelasche angeordneten Rastelement, das dafür vorgesehen ist, an einem Tragbügel des Scheibenwischerblattes einzurasten, und zwei Rastlaschen aufweist.

Ein solcher Spoiler, der aus der EP 0 599 637 A1 oder aus der DE-A-19627113 bekannt ist, dient dazu, bei höheren Fahrzeuggeschwindigkeiten zu gewährleisten, daß der Scheibenwischer mit der nötigen Anpreßkraft auf der zu reinigenden Scheibe aufliegt. Der Spoiler ist mit zwei im Abstand voneinander angeordneten Rastelementen versehen, die in jeweils ein Langloch im Tragbügel eingreifen. Die Rastlaschen sind dabei so an den Rastelementen angeordnet, daß sie an den einander entlang der Längsrichtung gegenüberliegenden Rändern des Langloches angreifen. Hieraus resultiert, daß auf den Spoiler einwirkende, parallel zur Längsachse des Tragbügels gerichtete Kräfte auf die Rastelemente einwirken und diese verformen können.

Die Aufgabe der Erfindung besteht darin, einen Spoiler der eingangs genannten Art dahingehend weiterzubilden, daß sich eine verbesserte Positionierung des Spoilers am Scheibenwischerblatt ergibt.

### Vorteile der Erfindung

Der erfindungsgemäße Spoiler mit den Merkmalen des Patentanspruchs 1 hat den Vorteil, daß eine zuverlässige Positionierung des Spoilers mittels der Anlageteile gewährleistet ist. Allgemein ausgedrückt beruht der erfindungsgemäße Spoiler auf einer funktionalen Trennung zwischen den Rastlaschen und den Anlageteilen. Die Anlageteile dienen dazu, durch Anlage am Rand der entsprechenden Öffnung im Tragbügel dafür zu sorgen, daß der Spoiler optimal positioniert ist und bei auf ihn einwirkenden Kräften nicht verrutschen kann. Die Rastlaschen dienen ausschließlich dazu, ein Herausziehen der Anlageteile aus der Öffnung im Tragbügel zu verhindern. Aufgrund der Anlageteile ist gewährleistet, daß die Rastlaschen durch auf den Spoiler einwirkende Kräfte nicht verbogen werden können, was insgesamt eine besonders zuverlässige Befestigung am Tragbügel gewährleistet.

Gemäß einer bevorzugten Ausführungsform der Erfindung ist vorgesehen, daß die Außenflächen der beiden Anlageteile in einem von 90° verschiedenen Winkel relativ zur Ebene der Haltelasche verlaufen, so daß sie nach Art einer Einführschräge wirken. Auf diese Weise wird das Aufsetzen und Einrasten des Spoilers am Tragbügel vereinfacht.

Vorzugsweise ist vorgesehen, daß die beiden Anlageteile in einem Schnitt parallel zur Ebene der Haltelasche jeweils einen etwa halbkreisförmigen Querschnitt aufweisen und daß die beiden Anlageteile durch zwei Verbindungsstege miteinander verbunden sind, die sich ausgehend von dem von der Haltelasche abgewandten Ende des entsprechenden Anlageteils zum jeweils gegenüberliegenden Anlageteil erstrecken. Die Verbindungsstege stabilisieren die Anlageteile und erhöhen die Festigkeit.

Gemäß der bevorzugten Ausführungsform der Erfindung ist vorgesehen, daß jede der beiden Rastlaschen an einem der Verbindungsstege angeordnet ist und sich ausgehend von diesem in Richtung der Haltelasche erstreckt. Bei dieser Gestaltung läßt sich mit sehr geringem Aufwand die erforderliche Elastizität der Rastlaschen erzielen.

Vorteilhafte Ausgestaltungen der Erfindung ergeben sich aus den Unteransprüchen.

### Zeichnungen

Die Erfindung wird nachfolgend anhand einer bevorzugten Ausführungsform beschrieben, die in den beigefügten Zeichnungen dargestellt ist. In diesen zeigen:
- Fig. 1 in einer perspektivischen Ansicht ein Scheibenwischerblatt mit aufgesetztem Spoiler;
- Fig. 2 in einer perspektivischen Ansicht von unten das Scheibenwischerblatt mit Spoiler von Fig. 1;

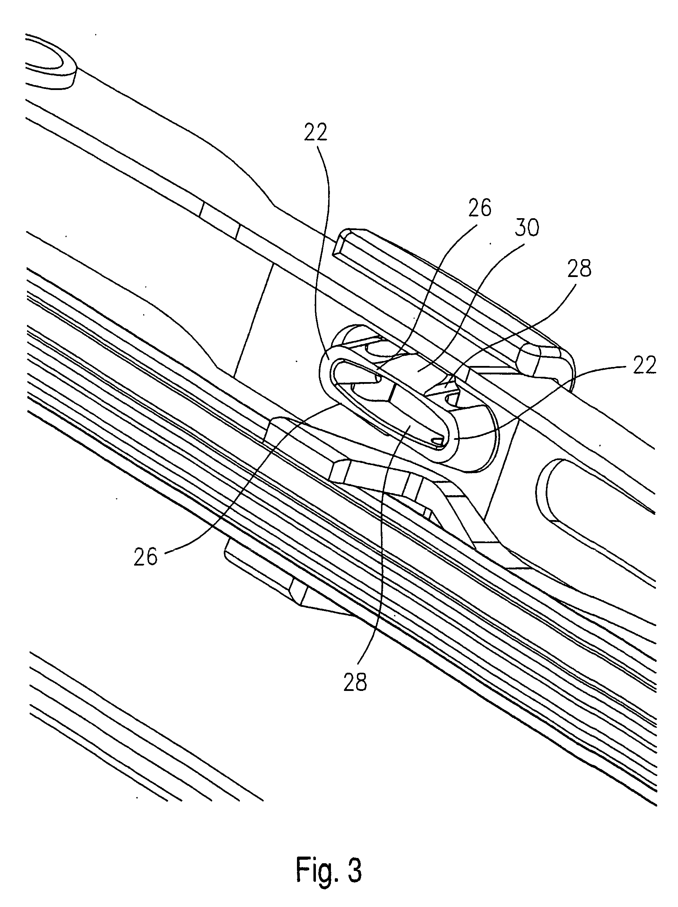

- Fig. 3 in vergrößertem Maßstab den Ausschnitt III von Fig. 2;
- Fig. 4 in einer perspektivischen Ansicht von unten einen Spoiler; und
- Fig. 5 in vergrößertem Maßstab den Ausschnitt V von Fig. 4.

### Beschreibung des Ausführungsbeispiels

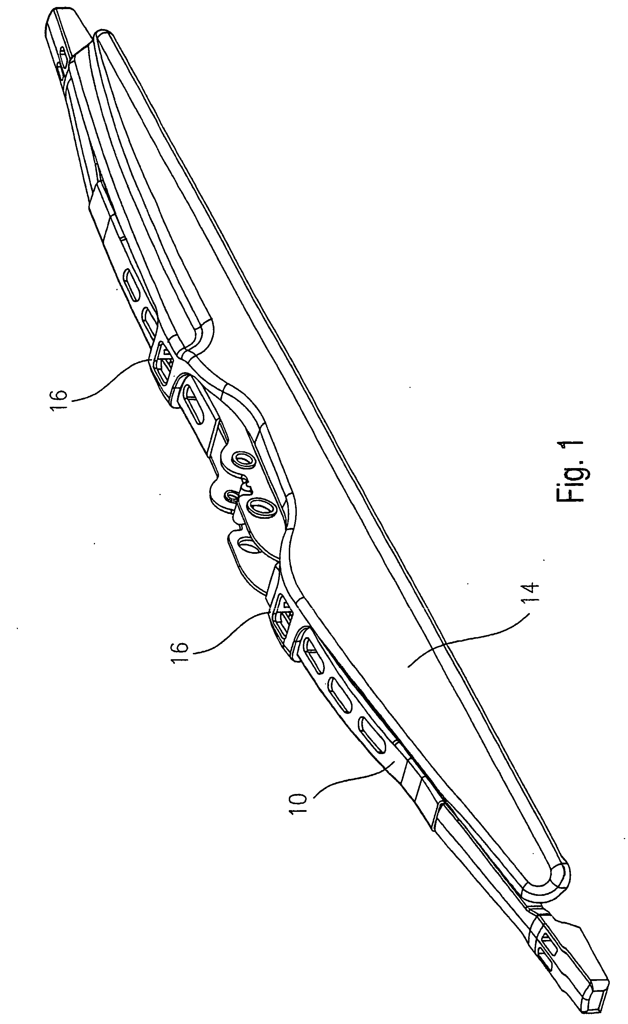

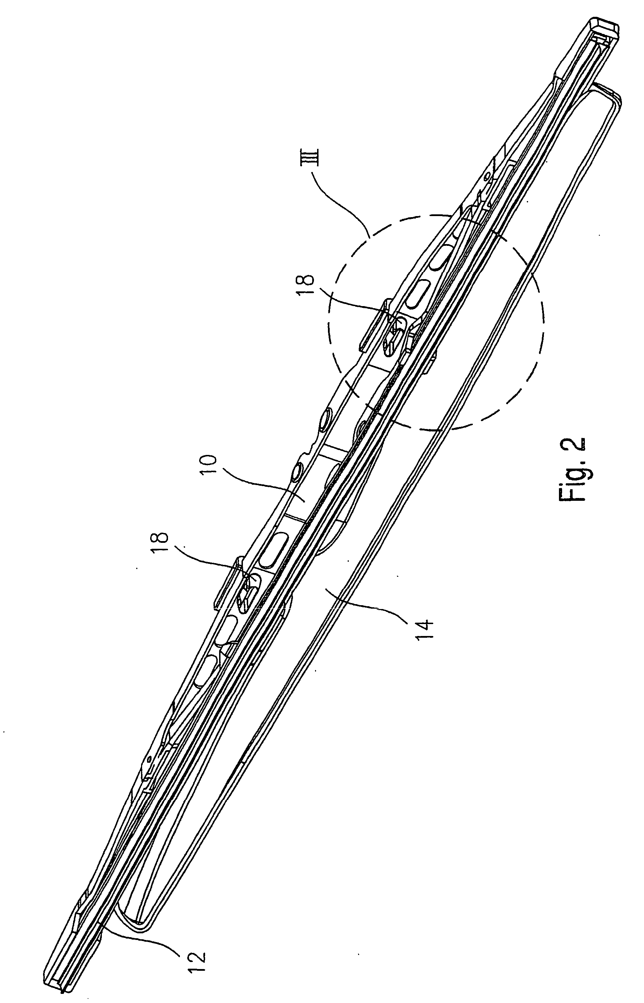

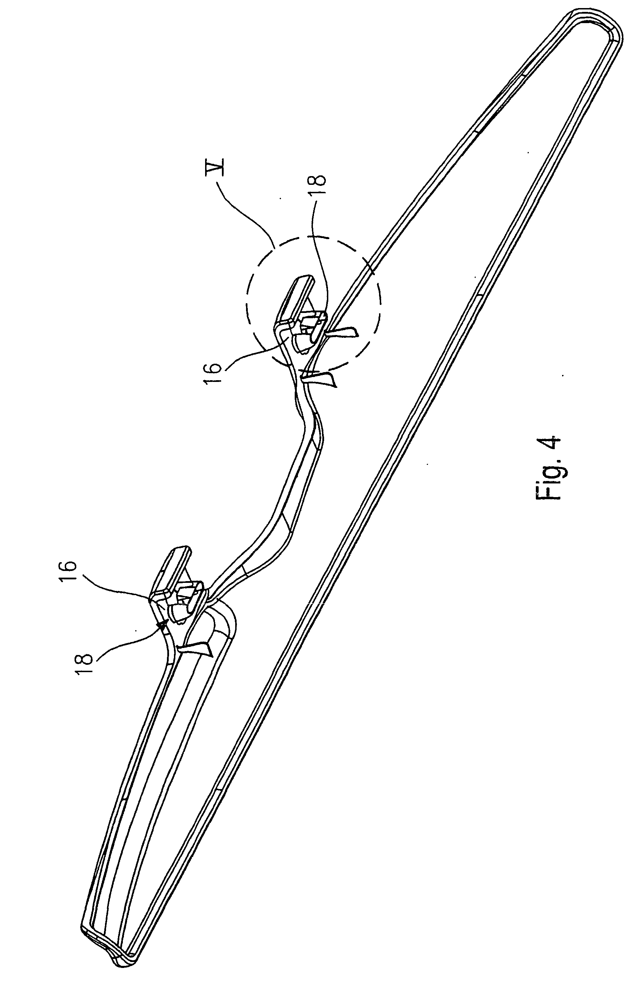

In Fig. 1 ist ein Tragbügel 10 gezeigt, der dafür vorgesehen ist, an einem (nicht dargestellten) Scheibenwischerarm befestigt zu werden und eine Wischleiste 12 (siehe Fig. 2) aufzunehmen. An dem Tragbügel 10 ist ein Spoiler 14 (siehe auch Fig. 4) angebracht, der dazu dient, ein Abheben der Wischleiste 12 von der zu reinigenden Scheibe zu verhindern, wenn das mit dem aus Wischleiste und Tragbügel bestehenden Scheibenwischerblatt versehene Fahrzeug sich mit höheren Geschwindigkeiten bewegt.

Der Spoiler 14 weist zwei Haltelaschen 16 auf, die entlang der Längsachse des Spoilers betrachtet in einem Abstand voneinander angeordnet sind. Jede Haltelasche 16 ist mit einem Rastelement 18 versehen, das dafür vorgesehen ist, in eine langlochartige Aussparung 20 im Tragbügel einzurasten.

Jedes Rastelement 18 weist zwei Anlageteile 22 auf, die einander entlang der Längsachse des Spoilers gesehen in einem Abstand gegenüberliegen. Jedes Anlageteil weist in einem Querschnitt parallel zur Haltelasche 16 gesehen den Querschnitt eines Ringes auf, der sich über einen Winkelbereich von etwa 180° erstreckt. Die beiden Anlageteile sind so angeordnet und dimensioniert, daß die von ihnen definierte Kontur im Bereich des Übergangs in die Haltelasche 16 etwa der Kontur der Aussparung 20 im Tragbügel entspricht. Um das Einsetzen der Rastelemente in die entsprechenden Aussparungen des Tragbügels zu erleichtern, sind die beiden Anlageteile so ausgebildet, daß sie sich ausgehend von einem Übergangsabschnitt, dessen Außenfläche 24a sich etwa senkrecht zur Ebene der Haltelasche 16 erstreckt, zu ihrem von der Haltelasche abgewandten Ende hin nach Art einer Einführschräge verjüngen; die Außenfläche 24b des sich verjüngenden Abschnittes schließen also einen von 90° verschiedenen Winkel mit der Ebene der Haltelasche 16 ein.

Die beiden Anlageteile 22 sind an ihrem von der Haltelasche 16 abgewandten Ende durch zwei Verbindungsstege 26 miteinander verbunden, so daß die Rastelemente auf ihrer von der Haltelasche abgewandten Seite eine durchgehende Stirnseite habe. Jeder Verbindungssteg 26 ist mit einer Rastlasche 28 versehen, die sich ausgehend von dem jeweiligen Verbindungssteg 26 in Richtung zur Haltelasche 16 hin erstreckt. Jede Rastlasche 28 ist auf ihrer außenliegenden Seite mit einer Rampe 30 versehen, die ausgehend von dem von der Haltelasche 16 abgewandten Ende des entsprechenden Rastelementes in Richtung zur Haltelasche hin eine zunehmende Dicke hat.

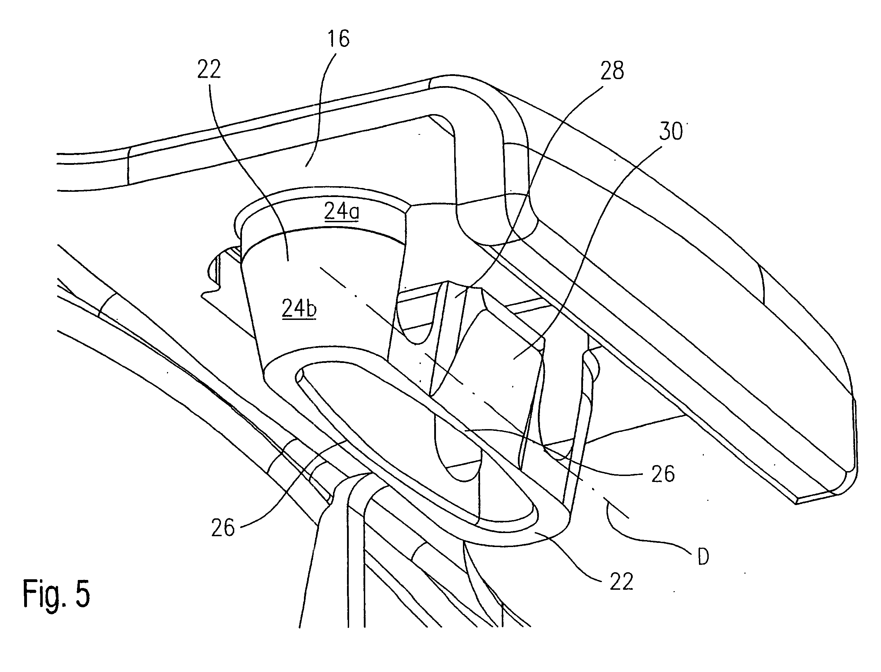

Zur Montage muß der Spoiler lediglich auf den Tragbügel 10 aufgedrückt werden. Durch die schräg verlaufenden Außenflächen 24b der Anlageteile können die Rastelemente leicht in die entsprechenden Aussparungen des Tragbügels eingeführt werden. Beim Einschieben der Rastelemente in die Aussparungen werden die Rastlaschen durch Anlage der Rampen 30 am Außenrand der Aussparungen nach innen gedrückt, wobei sie um die in Fig. 5 angezeigte Drehachse D verschwenkt werden. Sie können wieder elastisch nach außen in ihre Ursprungsstellung zurückfedern, wenn die Rastelemente so weit durch die Aussparungen hindurchgeschoben sind, daß die Haltelaschen 16 auf der Außenseite des Tragbügels anliegen. Die Rastlaschen liegen dann mit ihrem freien Ende an der Unterseite des Tragbügels an und verhindern, daß der Spoiler vom Tragbügel entfernt werden kann. Die Anlageteile gewährleisten durch ihre Außenflächen 24a, daß der Spoiler optimal am Tragbügel positioniert ist.

### Bezugszeichenliste

- 10:: Tragbügel
- 12:: Wischleiste
- 14:: Spoiler
- 16:: Haltelasche
- 18:: Rastelement
- 20:: Aussparung
- 22:: Anlageteil
- 24a:: Außenfläche
- 24b:: Außenfläche
- 26:: Verbindungssteg
- 28:: Rastlasche
- 30:: Rampe
- D:: Schwenkachse

## Patentansprüche

1. Spoiler für ein Scheibenwischerblatt, mit mindestens einer Haltelasche (16) und mindestens einem an der Haltelasche angeordneten Rastelement (18), das dafür vorgesehen ist, an einem Tragbügel des Scheibenwischerblattes einzurasten, und zwei Rastlaschen (28) aufweist, **dadurch gekennzeichnet, daß** das Rastelement zwei Anlageteile (22) aufweist, die entlang der Längsrichtung des Spoilers in einem Abstand voneinander angeordnet sind, und daß die beiden Rastlaschen zwischen den Anlageteilen angeordnet sind.

2. Spoiler nach Anspruch 1, **dadurch gekennzeichnet, daß** die Außenflächen der beiden Anlageteile (22) in einem von 90° verschiedenen Winkel relativ zur Ebene der Haltelasche verlaufen, so daß sie nach Art einer Einführschräge wirken.

3. Spoiler nach einem der Ansprüche 1 und 2, **dadurch gekennzeichnet, daß** die beiden Anlageteile (22) in einem Schnitt parallel zur Ebene der Haltelasche jeweils einen etwa halbkreisförmigen Querschnitt aufweisen und daß die beiden Anlageteile durch zwei Verbindungsstege (26) miteinander verbunden sind, die sich ausgehend von dem von der Haltelasche abgewandten Ende des entsprechenden Anlageteils zum jeweils gegenüberliegenden Anlageteil erstrecken.

4. Spoiler nach Anspruch 3, **dadurch gekennzeichnet, daß** jede der beiden Rastlaschen (28) an einem der Verbindungsstege (26) angeordnet ist und sich ausgehend von diesem in Richtung der Haltelasche erstreckt.

5. Baugruppe bestehend aus einem Scheibenwischerblatt mit Tragbügel (10) und einem Spoiler (14) nach einem der vorhergehenden Ansprüche, **dadurch gekennzeichnet, daß** der Tragbügel mit einer länglichen Aussparung (20) für das Rastelement (18) versehen ist und die Anlageteile (22) des Rastelementes so angeordnet und dimensioniert sind, daß jedes Anlageteil an einem der Enden der länglichen Aussparung anliegt.

## Claims

1. Spoiler for a window wiper blade, having at least one retaining lug (16) and at least one latching element (18) which is arranged on the retaining lug and is provided for the purpose of snapping into place on a supporting bracket of the window wiper blade, and has two latching lugs (28), **characterized in that** the latching element has two locating parts (22) which are arranged at a distance from each other along the longitudinal direction of the spoiler, and **in that** the two latching lugs are arranged between the locating parts.

2. Spoiler according to Claim 1, **characterized in that** the outer surfaces of the two locating parts (22) run at an angle differing from 90° relative to the plane of the retaining lug, so that they act in the manner of an introductory slope.

3. Spoiler according to either of Claims 1 and 2, **characterized in that** the two locating parts (22) each have an approximately semicircular cross section in a section parallel to the plane of the retaining lug, and **in that** the two locating parts are connected to each other by two connecting webs (26) which extend from that end of the corresponding locating part which faces away from the retaining lug to the respectively opposite locating part.

4. Spoiler according to Claim 3, **characterized in that** each of the two latching lugs (28) is arranged on one of the connecting webs (26) and extends from the latter in the direction of the retaining lug.

5. Subassembly comprising a window wiper blade having a supporting bracket (10) and a spoiler (14) according to one of the preceding claims, **characterized in that** the supporting bracket is provided with an elongate cutout (20) for the latching element (18), and the locating parts (22) of the latching element are arranged and dimensioned in such a manner that each locating part bears against one of the ends of the elongate cutout.

## Revendications

1. Déflecteur de balai d'essuie-glace comportant au moins une patte de fixation (16) et au moins un élément d'accrochage (18) prévu sur cette patte de fixation et qui, pour s'accrocher dans le palonnier du balai d'essuie-glace, comporte deux pattes d'accrochage (28),
**caractérisé en ce que**
l'élément d'accrochage comporte deux parties d'appui (22), écartées l'une de l'autre dans la direction longitudinale du déflecteur et les deux pattes d'accrochage sont situées entre les pièces d'appui.

2. Déflecteur selon la revendication 1,
**caractérisé en ce que**
les surfaces extérieures des deux parties d'appui (22) font un angle différent de 90° par rapport au plan des pattes de fixation pour fonctionner comme une rampe d'introduction.

3. Déflecteur selon l'une des revendications 1 et 2,
**caractérisé en ce que**
les deux parties d'appui (22) ont en section, selon une coupe parallèle au plan de la patte de fixation, chacune une forme sensiblement semi-circulaire et les deux parties d'appui sont reliées par deux entretoises (26) s'étendant à partir de l'extrémité de la partie d'appui correspondante, opposée à la patte de fixation vers la partie d'appui respectivement opposée.

4. Déflecteur selon la revendication 3,
**caractérisé en ce que**
les deux pattes d'accrochage (28) sont prévues sur l'une des entretoises de liaison (26) et s'étendent en direction des pattes de fixation en partant de cette entretoise.

5. Ensemble composé d'un balai d'essuie-glace avec un palonnier de support (10) et un déflecteur (14) selon l'une des revendications précédentes,
**caractérisé en ce que**
l'étrier comporte une découpe allongée (20) pour l'élément d'accrochage (18), et les parties d'appui (22) de l'élément d'accrochage sont installées et dimensionnées pour que chaque partie d'appui vienne contre l'une des extrémités de la découpe allongée.
